# DEMANDE DE BREVET EUROPEEN

(11) **EP 1 046 540 A1**
(43) Date de publication de la demande: **25.10.2000**
(21) Numéro de dépôt: 00490014.8
(22) Date de dépôt: 21.04.2000
(51) Int. Cl.: B60N 2/44, B60N 2/42

(54) **Structure déformable de siège pour véhicule**

(30) Priorité: 22.04.1999 FR 9905280
(71) Demandeur: BV Productions, S.A., 62420 Billy Montigny (FR)
(72) Inventeur: Vandenbrand, Bernard, 62420 Billy Montigny (FR)
(74) Mandataire: Ecrepont, Robert

(57) **Abrégé**

L'invention se rapporte à une structure déformable (2) pour siège (1) comportant une telle structure, laquelle structure (2) comprend, d'une part, des parties rigides (3, 4) d'assise et de dossier et, d'autre part, un moyen (9) d'absorption d'énergie cinétique, c'est-à-dire un moyen (9) qui, en cas de brusque décélération du véhicule équipé du siège, autorise, par déformation plastique contrôlée de la structure (2), un basculement, d'une certaine amplitude, du dossier vers l'assise.

## Description

L'invention se rapporte à une structure déformable de siège pour véhicule, notamment, automobile.

L'invention se rapporte également aux sièges comprenant cette structure déformable.

L'invention intéresse plus particulièrement mais non exclusivement une structure déformable pour des sièges dits "à ceinture embarquée", c'est-à-dire des sièges qui présentent des points d'ancrage pour les extrémités opposées des sangles constituant les ceintures de sécurité.

Par structure, on désigne une structure qui comprend des éléments rigides d'assise et de dossier, c'est à dire des éléments rigides destinés à porter des coussins en position utile par rapport à un piétement d'appui sur un support, tel un plancher de véhicule automobile.

Par structure déformable, on désigne une structure du type précité qui comprend un moyen d'absorption d'énergie cinétique, c'est-à-dire un moyen qui, en cas de brusque décélération du véhicule équipé du siège, autorise une déformation plastique contrôlée de la structure de manière à permettre l'absorption d'une partie de l'énergie cinétique d'un passager assis et sanglé sur ce siège.

Cette déformation plastique se concrétise par un basculement, d'une certaine amplitude, du dossier vers l'assise.

L'état de la technique comprend de tels sièges à structure déformable, par exemple, les sièges objets des demandes internationales WO 97/20707, WO 98/13227.

Ces sièges de l'état de la technique ont leurs avantages mais leur construction reste relativement complexe et onéreuse.

Un résultat que l'invention vise à obtenir est un siège du type précité qui est de construction simple et peut se déformer de manière préétablie en cas de brusque décélération.

A cet effet, l'invention a pour objet une structure déformable de siège pour véhicule, notamment, automobile, laquelle structure comprend, d'une part, des parties rigides d'assise et de dossier et, d'autre part, un moyen d'absorption d'énergie cinétique, c'est-à-dire un moyen qui, en cas de brusque décélération du véhicule équipé du siège, autorise, par déformation plastique contrôlée de la structure, un basculement, d'une certaine amplitude, du dossier vers l'assise, cette structure étant notamment caractérisée en ce que la structure comprend :
- des éléments longilignes qui, de section transversale sensiblement constante, sont disposés de chaque côté du siège et conformés de manière à constituer chacun deux parties qui, reliées par une partie coudée, s'étendent, l'une, selon une rive latérale de l'assise et, l'autre, selon la rive latérale du dossier située du même côté,
- des éléments assurant la liaison transversale entre les dits éléments longilignes situés au niveau des rives,
- des pièces de rigidification qui sont associées aux éléments longilignes essentiellement dans chacune de leurs parties situées au niveau d'une rive d'assise et d'une rive de dossier, de manière à limiter, à la partie coudée, leur capacité à fléchir sous l'effet d'une charge.

L'invention a également pour objet le siège pour véhicule équipé de la structure précitée.

L'invention sera bien comprise à la lecture de la description ci-après faite à titre d'exemple non limitatif, en regard du dessin ci-annexé qui représente :

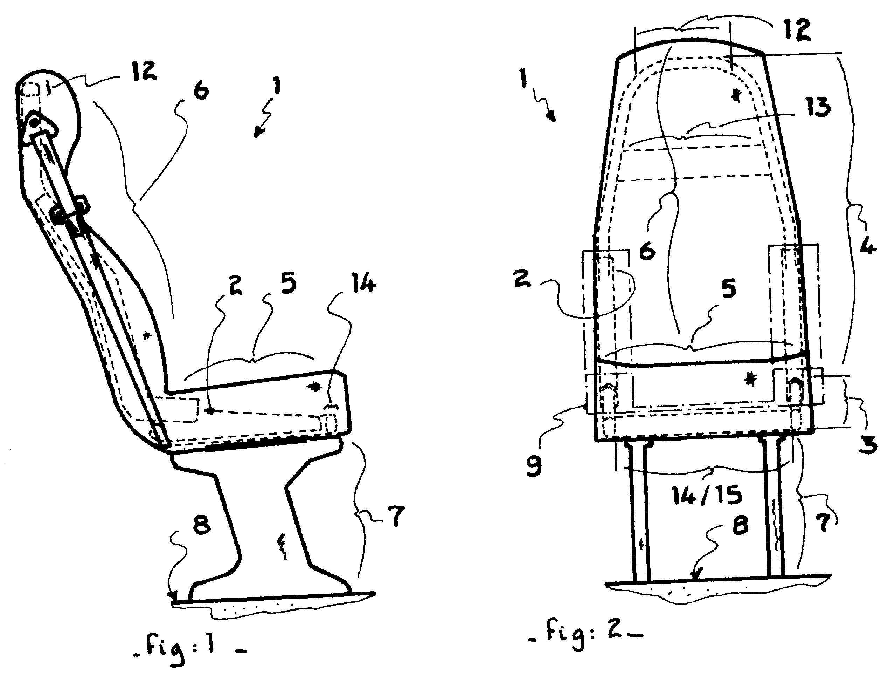

- figure 1 : vu latéralement, un siège selon l'invention,
- figure 2 : une vue de face du siège de la figure 1,

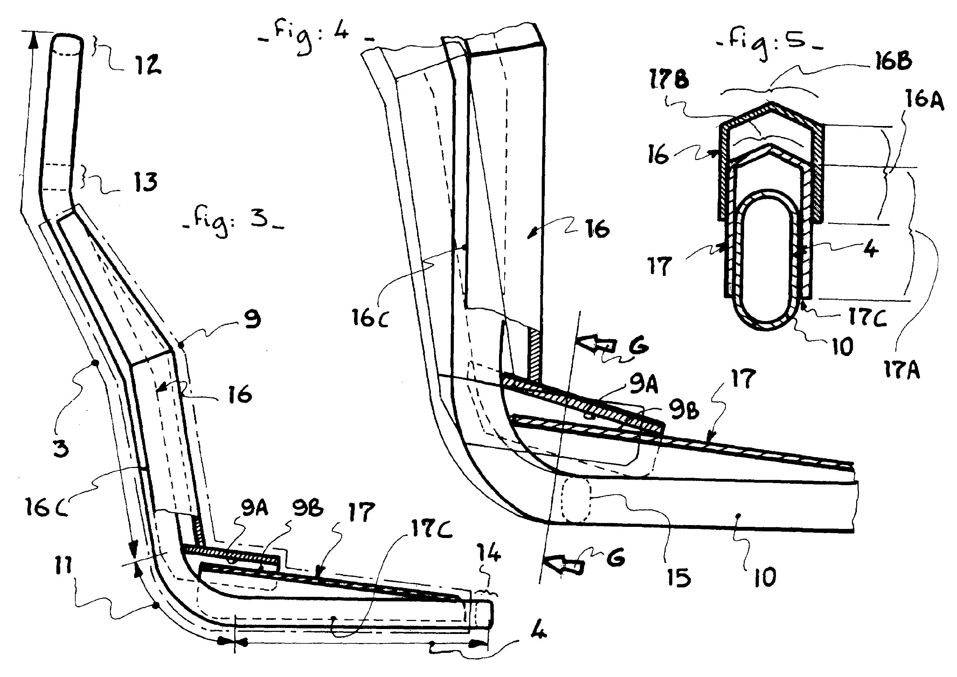

- figure 3 : vue latéralement et à plus grande échelle, la structure du siège de la figure 1,
- figure 4 : à plus grande échelle, une vue latérale partielle de la structure du siège avant et après déformation,
- figure 5 : une vue en coupe transversale selon GG de pièces de la structure représentée en figure 4.

En se reportant au dessin, on voit un siège 1 à structure 2 déformable.

La structure 2 comprend des parties rigides 3, 4 d'assise et de dossier, c'est à dire des parties rigides destinées à porter des coussins 5, 6 d'assise et de dossier en position utile par rapport à un piétement d'appui 7 sur un support 8, tel un plancher de véhicule automobile.

Tel que cela est représenté, le siège est du type à ceinture embarquée (S) c'est à dire qu'il comporte une ceinture dont les points d'ancrage se situent au niveau du siège et de la partie supérieure du dossier.

La structure déformable 2 comprend un moyen 9 d'absorption d'énergie cinétique, c'est-à-dire un moyen 9 qui, en cas de brusque décélération du véhicule équipé du siège, autorise, par déformation plastique contrôlée de la structure 2, un basculement, d'une certaine amplitude, du dossier vers l'assise.

De manière remarquable, la structure 2 intègre le moyen 9 d'absorption d'énergie et, à cet effet, comprend :
- des éléments longilignes 10 qui, de section transversale sensiblement constante, sont disposés de chaque côté du siège et conformés de manière à constituer chacun deux parties 3, 4 qui, reliées par une partie coudée 11, s'étendent, l'une 4, selon une rive latérale de l'assise et, l'autre 3, selon la rive latérale du dossier située du même côté,
- des éléments 12 à 15 assurant la liaison transversale entre les dits éléments longilignes 10 situés au niveau des rives,
- des pièces 16, 17 de rigidification qui sont associées aux éléments longilignes 10 essentiellement dans chacune de leurs parties 3, 4 situées au niveau d'une rive d'assise et d'une rive de dossier, de manière à limiter, à une fraction déterminée de la partie coudée 11, leur capacité à fléchir sous l'effet d'une charge.

De manière notable, les éléments longilignes 10 sont des éléments tubulaires, avantageusement métalliques.

De manière également remarquable :
- d'une part, les pièces 16, 17 de rigidification associées aux éléments longilignes 10 sont des pièces de section transversale en U, c'est-à-dire des pièces 16, 17 qui comprennent deux lames 16A, 17A latérales situées de part et d'autre d'un plan de symétrie et au moins une lame médiane 16B, 17B de liaison des dites lames latérales 16A, 17A par deux 16C, 17C de leur rives longitudinales 16D,17D et,
- d'autre part, c'est au niveau des rives longitudinales libres 16D, 17D de ses lames latérales 16A, 17A que chaque pièce de rigidification 16, 17 est associée à une partie 3, 4 d'élément longiligne 10 qu'elle doit rigidifier.

Lorsque les éléments longilignes 10 sont métalliques, d'une part, les pièces de rigidification 16, 17 sont également métalliques et, d'autre part, l'association desdits éléments 10 et pièces de rigidification 16, 17 est obtenue par soudure ou par brasage.

De manière remarquable, la structure 2 comprend une pièce unique pour constituer, d'une part, les éléments longilignes 10 disposés de chaque coté du siège et, d'autre part, au moins l'un 12 des éléments 12 à 15 assurant la liaison transversale des dits éléments longilignes 10.

De manière remarquable, dans la partie supérieure du dossier, la pièce longiligne est conformée de manière à constituer une partie courbe 12 qui forme une structure périphérique pour un appui-tête.

Pour constituer le moyen 9 qui, en cas de brusque décélération du véhicule équipé du siège, autorise, par déformation plastique contrôlée de la structure 2, un basculement du dossier vers l'assise, d'une certaine amplitude, la structure comprend au moins une paire de butées 9A, 9B antagonistes qui, l'une associée au dossier et, l'autre associée à l'assise sont disposées et orientées pour entrer en contact lorsque le dossier a basculé d'une certaine amplitude vers l'assise (représentation en traits forts à la figure 5).

De manière remarquable, les butées antagonistes 9A, 9B sont, au moins indirectement, portées par les pièces de rigidification 16, 17 qui sont associées aux éléments longilignes 10 essentiellement dans chacune de leur parties constitutives d'une rive d'assise et d'une rive de dossier.

## Revendications

1. Structure déformable (2) pour siège (1) comportant une telle structure (2), laquelle structure (2) comprend, d'une part, des parties rigides (3, 4) d'assise et de dossier et, d'autre part, un moyen (9) d'absorption d'énergie cinétique, c'est-à-dire un moyen (9) qui, en cas de brusque décélération du véhicule équipé du siège, autorise, par déformation plastique contrôlée de la structure (2), un basculement, d'une certaine amplitude, du dossier vers l'assise,
cette structure étant **CARACTERISEE** en ce qu'elle comprend :
- des éléments longilignes (10) qui, de section transversale sensiblement constante, sont disposés de chaque côté du siège et conformés de manière à constituer chacun deux parties (3, 4) qui, reliées par une partie coudée (11), s'étendent, l'une (4), selon une rive latérale de l'assise et, l'autre (3), selon la rive latérale du dossier située du même côté,
- des éléments (12 à 15) assurant la liaison transversale entre les dits éléments longilignes (10) situés au niveau des rives,
- des pièces (16, 17) de rigidification qui sont associées aux éléments longilignes (10) essentiellement dans chacune de leurs parties (3, 4) situées au niveau d'une rive d'assise et d'une rive de dossier, de manière à limiter, à une fraction déterminée de la partie coudée (11), leur capacité à fléchir sous l'effet d'une charge.

2. Structure selon la revendication 1 **caractérisé** en ce que les éléments longilignes (10) sont des éléments tubulaires, avantageusement métalliques.

3. Structure selon la revendication 2 **caractérisé** en ce que
- d'une part, les pièces (16, 17) de rigidification associées aux éléments longilignes (10) sont des pièces de section transversale en U, c'est-à-dire des pièces (16, 17) qui comprennent deux lames (16A, 17A) latérales situées de part et d'autre d'un plan de symétrie et au moins une lame médiane (16B, 17B) de liaison des dites lames latérales (16A, 17A) par deux (16C, 17C) de leur rives longitudinales (16D, 17D) et,
- d'autre part, c'est au niveau des rives longitudinales libres (16D, 17D) de ses lames latérales (16A, 17A) que chaque pièce de rigidification (16, 17) est associée à une partie (3, 4) d'élément longiligne (10) qu'elle doit rigidifier.

4. Structure selon l'une quelconque des revendications 1 à 3 **caractérisé** en ce qu'elle comprend une pièce unique pour constituer, d'une part, les éléments longilignes (10) disposés de chaque coté du siège et, d'autre part, au moins l'un (12) des éléments (12 à 15) assurant la liaison transversale des dits éléments longilignes (10).

5. Structure selon la revendication 4 **caractérisé** en ce que, dans la partie supérieure du dossier, la pièce longiligne est conformée de manière à constituer une partie courbe (12) qui forme une structure périphérique pour un appui-tête.

6. Structure selon l'une quelconque des revendication 1 à 5 et dont le moyen (9) autorisant une déformation plastique contrôlée, comprend au moins une paire de butées (9A, 9B) antagonistes qui, l'une associée au dossier et, l'autre associée à l'assise sont disposées et orientées pour entrer en contact lorsque le dossier a basculé d'une certaine amplitude vers l'assise, **caractérisée** en ce que les butées antagonistes (9A, 9B) sont, au moins indirectement, portées par les pièces de rigidification (16, 17) qui sont associées aux éléments longilignes (10) essentiellement dans chacune de leur parties constitutives d'une rive d'assise et d'une rive de dossier.

7. Siège **caractérisé** en ce qu'il est équipé d'une structure selon l'une quelconque des revendications 1 à 6.
